# EUROPÄISCHE PATENTSCHRIFT

(11) **EP 2 637 057 B1**
(45) Veröffentlichungstag und Bekanntmachung des Hinweises auf die Patenterteilung: **25.06.2014**
(21) Anmeldenummer: 13152429.0
(22) Anmeldetag: 23.01.2013
(51) Int. Cl.: G02B 26/00, G02B 6/00, F21V 8/00, G02B 6/35, G01S 17/42, G01B 11/14, G01S 7/481, G02B 13/06, G02B 6/27

(54) **Lichtquelle für einen Sensor und entfernungsmessender optoelektronischer Sensor**
Light source for a sensor and distance measuring optoelectronic sensor
Source lumineuse pour un capteur et capteur optoélectronique mesurant l'éloignement

(30) Priorität: 05.03.2012 DE 102012101811
(43) Veröffentlichungstag der Anmeldung: 11.09.2013
(73) Patentinhaber: SICK AG, 79183 Waldkirch (DE)
(72) Erfinder: Werber, Armin, Dr., 79211 Denzlingen (DE)
(74) Vertreter: Ludewigt, Christoph

(56) Entgegenhaltungen:
- EP-A2- 1 542 056
- WO-A1-2004/097495
- WO-A2-2008/097440
- US-A1- 2009 052 000
- US-B1- 6 204 916

## Beschreibung

Die Erfindung betrifft eine Lichtquelle für einen Sensor nach dem Oberbegriff von Anspruch 1 und einen entfernungsmessenden optoelektronischen Sensor nach dem Oberbegriff des Anspruchs 5.

Für zahlreiche Vermessungs- und Überwachungsanwendungen werden Laserscanner eingesetzt, welche die räumliche Struktur ihrer Umgebung in Form eines Abstandsprofils einer festgelegten Ebene erfassen. Dazu wird ein Sendestrahl mittels eines Drehspiegels über einen Winkelbereich bis zu 360° abgelenkt, um die Ebene in diskreten Winkelschritten abzutasten. Zu jedem Winkel wird ein kurzer Lichtpuls ausgesandt und die Lichtlaufzeit bis zum Empfang des aus der Überwachungsebene von einem Objekt reflektierten oder remittierten Sendestrahls gemessen, die dann über die Lichtgeschwindigkeit in eine Entfernungsinformation umgerechnet wird (TOF). Ein alternatives Verfahren zur Lichtlaufzeitbestimmung ist die Messung der Phasenverschiebung zwischen amplitudenmoduliertem Sendelicht und Empfangslicht. Durch diese Erfassung der räumlichen Struktur in Abstand und Winkel werden Objektpositionen oder Objektkonturen in Polarkoordinaten bestimmt. Dabei lässt sich eine objektive Abgrenzung zwischen der Erfassung einer Objektkontur und eines Objekts nicht angeben, da man jede Teilkontur auch als Objekt auffassen kann und umgekehrt.

Insbesondere für scannende TOF-Laserentfernungsmesser, die einen vergleichsweise großen Winkelbereich von bis zu 360° in wenigstens einer Sende- oder Erfassungsebene überwachen sollen, ist es bekannt, den im Prinzip eindimensionalen Abtastlaserstrahl, also die ausgesandte Strahlung, innerhalb dieser Ebene mit einer vorgegebenen, die Ortsauflösung mit bestimmenden Winkelauflösung auszulenken. Hierzu ist es bekannt, in den - auch einfach als Sensoren bezeichneten - Erfassungsvorrichtungen den - auch als Mess- oder Fahrstrahl bezeichneten - Abtaststrahl mittels eines motorisch bewegten rotierenden Prismas oder mittels eines z.B. um 45° zur optischen Achse gekippten rotierenden Spiegels auszulenken. In diesen Fällen verlaufen die Rotationsachse des Primas bzw. des Spiegels und die optische Achse des Sensors parallel zueinander. In einer alternativen Ausgestaltung kann die gesamte elektrooptische Einheit des Sensors zur Rotation gebracht werden. Hierbei werden sowohl die Sendeals auch die Empfangsapertur auf einer Kreisbahn bewegt, um dafür zu sorgen, dass der Abtaststrahl des Sensors den gewünschten Winkelbereich von bis zu 360° überstreicht.

Diese Lösungen haben den Nachteil, dass vergleichsweise große Massen bewegt, insbesondere in Rotation versetzt, werden müssen. Die hierzu erforderliche elektrische Leistung trägt in einem nicht unerheblichen Umfang zur gesamten Leistungsaufnahme des Sensors bei. Von Nachteil ist ferner, dass die erforderliche Lagerung der rotierenden Bauteile die Lebensdauer des Sensors signifikant begrenzt. Weitere Nachteile sind, dass durch die serielle Abtastung der Scanbewegung die Messfrequenz auf Werte im Bereich um 30 Hz begrenzt ist. Die mechanische Drehbewegung macht das System anfällig für mechanische Umwelteinflüsse und Verschleiß. Der Platzbedarf für den Drehspiegel führt zu einer gewissen Mindestbaugröße. Der Drehspiegel sorgt dabei nicht allein für die Ablenkung des Sendelichts, sondern zugleich dafür, dass auch das Sichtfeld des Empfängers auf die zu beobachtende Richtung gelenkt und begrenzt wird, um Störeffekte durch Fremdlicht gering zu halten. In den meisten praktischen Ausführungen verdeckt außerdem der mechanische Aufbau des Scanners und des Drehspiegels einen Teil des horizontalen Sichtbereichs, so dass anstelle von 360° meist nur bis zu 270° Grad zur Verfügung stehen. Schließlich entstehen durch die Präzisionsanforderungen und die aufwändige Justage und Montage relativ hohe Kosten.

Aus der EP 2 124 069 B1 ist ein Laserscanner bekannt mit einer 360° Panoramaoptik, die sowohl im Sendelichtpfad als auch im Empfangspfad vorgesehen ist. Das vermeidet zwar drehende mechanische Teile und damit Verschleiß, allerdings ist die Energieausbeute äußerst gering, da der Sendestrahl in 360° ausgesandt wird, wovon aber nur ein Bruchteil von einem Objekt im Scanbereich reflektiert wird. Außerdem muss dann eine ortsauflösende Empfangsoptik eingesetzt werden, um überhaupt noch eine Winkelauflösung zu erreichen, also um feststellen zu können, aus welcher Richtung das reflektierte Licht kommt.

Aus der US 2010/0165451 A1 sind Lichtablenkvorrichtungen bekannt, die den Effekt der Elektrobenetzung nutzen.

In US 2007/0013990 A1 ist ein Miniaturmotor offenbart, dessen Rotor über Flüssigkeiten und dem Effekt der Elektrobenetzung angetrieben wird. Der Miniaturmotor kann in einem optischen Scanner zum Drehen eines Spiegels eingesetzt werden.

Es ist Aufgabe der Erfindung, eine verbesserte Lichtquelle und einen damit aufgebauten Sensor bereitzustellen, mit dem die vorgenannten Nachteile vermieden werden können.

Diese Aufgabe wird durch eine Lichtquelle für einen optoelektronischen Sensor bzw. einen Sensor mit einer solchen Lichtquelle mit den Merkmalen der Ansprüche 1 bzw. 5 gelöst.

Die erfindungsgemäße Lichtquelle kann Licht in verschiedene Beobachtungsrichtungen aussenden und weist ein Lichtsendeelement zur Erzeugung von Sendelicht und eine Ablenkeinheit, mit der das Sendelicht in unterschiedliche Richtungen ablenkbar ist, auf. Erfindungsgemäß umfasst die Ablenkeinheit ein gekrümmtes Lichtleitelement, in das das Sendelicht einkoppelbar ist. Ein Kanal ist dem Lichtleitelement auf der konvexen Seite unmittelbar benachbart, wobei der Kanal zwei polare Fluide mit unterschiedlichen Brechungsindizes enthält, die nicht gemischt sind und die mittels elektrischer Kräfte aufgrund des Effektes der Elektrobenetzung in dem Kanal in Längsrichtung verschiebbar sind, wobei der Brechungsindex des ersten Fluids kleiner der des Lichtleitelements ist, so dass das eingekoppelte Sendelicht in dem Lichtleitelement in den Abschnitten, in denen das erste Fluid dem Lichtleitelement benachbart ist, totalreflektiert wird. Der Brechungsindex des zweiten Fluids ist größer als der des Lichtleitelements, so dass das eingekoppelte Sendelicht aus der Lichtleitfaser in den Bereichen ausgekoppelt wird, in denen das zweite Fluid der Lichtleitfaser benachbart ist.

Ein entfernungsmessender Sensor (Laserscanner) mit einer solchen Lichtquelle hat keine mechanischen Verschleißteile mehr, was sich entsprechend auf die Lebensdauer und Einsatzmöglichkeiten auswirkt. Die Drehbewegung des Abtaststrahls erfolgt durch Auskopplung mittels des zweiten Fluids, das in dem Kanal bewegt wird. Also nur in dem Bereich, in dem das zweite Fluid sich momentan befindet, ist die Totalreflexion aufgrund des kleineren Brechungsindex des zweiten Fluids unterbrochen und das Licht kann austreten. Das zweite Fluid wirkt dann quasi wie ein umlaufendes Fenster, durch das das Licht austreten kann. Ist der Kanal kreisförmig erhält man den rotierenden Abtaststrahl. Da die polaren Fluide allein durch elektrische Kräfte bewegt werden, sind keine mechanisch bewegten Teile mehr notwendig. Die Funktionsweise der Kraftausübung auf polare Flüssigkeiten durch Elektrobenetzung sind in L Yeo, J Friend. Electrowetting, Applications. In Encyclopedia of Microfluidics and Nanofluidics (ed. D Li), pp. 606-615 (Springer, New York, 2008) sehr gut beschrieben.

Ein weiterer Vorteil ist, dass die Ablenkeinheit resistent gegenüber Schwingungen und Schock ist, da die Massen der Fluide sehr klein gehalten werden können und der Kanal ein so genannter Mikrokanal ist und dadurch die Fluidmassen gegenüber Beschleunigungen erheblich resistenter sind als eine makroskopische Ablenkeinheit mit Drehspiegel und Motor.

Vorzugsweise ist das Lichtleitelement ein Lichtleitfaserring aus Polydimethylsiloxan oder Polycarbonat.

Damit nur ein im Querschnitt möglichst kleiner und möglichst gerichteter Strahl von der Lichtquelle ausgesandt wird, also aus der Lichtleitfaser ausgekoppelt wird, erstreckt sich das zweite Fluid nur über einen Bruchteil des Kanals in Umfangsrichtung gesehen, also des Faserringumfangs. Der Rest des Kanals ist mit dem ersten Fluid gefüllt, so dass nur auf einem vergleichsweise kleinen Abschnitt des Kanals das erste Fluid vorliegt.

Eine gute Bewegung der Fluide mittels Elektrobenetzung lässt sich erreichen, wenn Elektroden dem Kanal direkt benachbart sind.

In Weiterbildung der Erfindung ist eine omnidirektionale Empfangsoptik vorgesehen, um das Empfangslicht aus jeder Beobachtungsrichtung auf den Lichtempfänger zu leiten.

Dabei ist es vorteilhaft, wenn dem Lichtempfänger ein elektrisch steuerbares optisches Element mit einer Vielzahl von in ihrer Lichtdurchlässigkeit steuerbaren Zonen vorgeordnet ist und dass eine wählbare Beobachtungsrichtung durch höhere Lichtdurchlässigkeit von Zonen, die der gewählten Beobachtungsrichtung zugeordnet sind, und geringere Lichtdurchlässigkeit der übrigen Zonen vorgebbar ist. Dies hat den Vorteil, dass den Lichtempfänger aus anderen Richtungen als dem jeweils zu einem zu beobachtenden Zeitpunkt interessierenden Winkelbereich weniger Fremdlicht erreicht. Dies führt zu einer erhöhten Robustheit und Zuverlässigkeit der Objekterfassung sowie zur Erhöhung der Empfindlichkeit und damit der Reichweite.

Vorteilhaft ist es, dass dann die virtuelle Drehbewegung des elektrisch steuerbaren optischen Elements mit der Rotationsgeschwindigkeit des zweiten Fluids synchronisiert ist.

Die omnidirektionale Empfangsoptik könnte in einer Ausführungsform eine Sternblende aufweisen, welche den Überwachungsbereich in Sektoren aufteilt. So ist auf einfache Weise ein Teil des Umgebungslichts abgeblockt.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung eines erfindungsgemäßen Sensors mit den wesentlichen Komponenten;
- Fig. 2: eine schematische Draufsicht auf eine Sternblende;
- Fig. 3: eine schematische Schnittansicht der erfindungsgemäßen Lichtquelle;
- Fig. 4: eine Draufsicht auf die Lichtquelle der Fig. 3 zur Verdeutlichung des Funktionsprinzips.

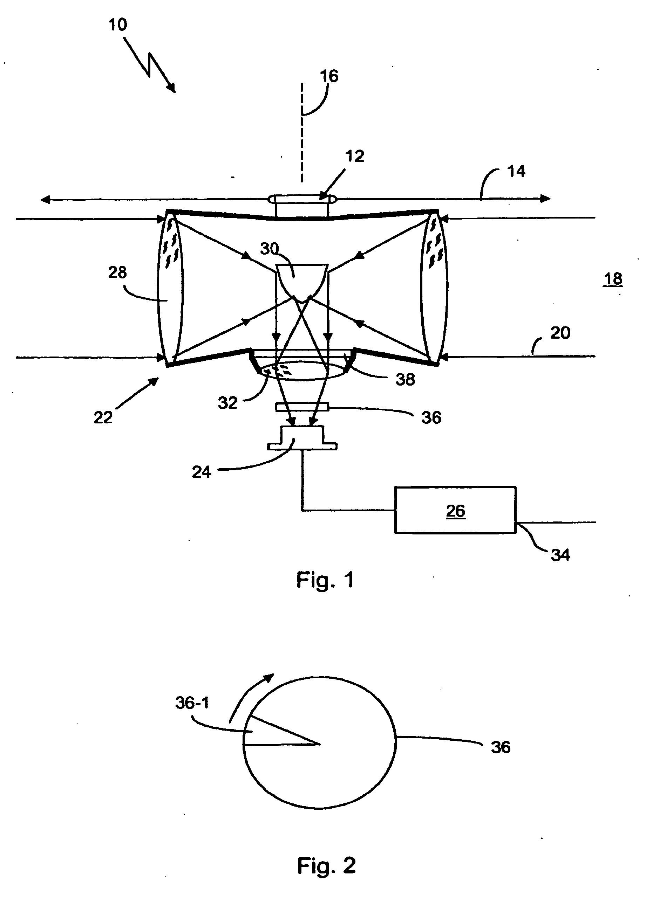

Ein in Fig. 1 dargestellter, erfindungsgemäßer, optoelektronischer, entfernungsmessender Sensor 10 weist eine erfindungsgemäße Lichtquelle 12, die weiter unten noch detailliert beschrieben wird, auf. Die Lichtquelle 12 sendet einen um eine Achse 16 umlaufenden Sendelichtstrahl 14 in einen Überwachungsbereich 18 aus, wobei der Sendelichtstrahl 14 den Überwachungsbereich 18 periodisch in einer Ebene überstreicht.

Trifft das Sendelicht 14 in dem Überwachungsbereich 18 auf ein Objekt, so wird ein Teil reflektiert oder remittiert und kehrt als Empfangslicht 20 zu dem Sensor 10 zurück. Eine omnidirektionale Empfangsoptik 22 führt das Empfangslicht 20 auf einen Lichtempfänger 24, der das Empfangslicht 20 in ein elektrisches Empfangssignal umwandelt. Einer Auswerteeinheit 26 wird einerseits das Empfangssignal und andererseits ein den Winkel des ausgesandten Sendelichtstrahls repräsentierendes Winkelsignal zugeführt, so dass die Auswerteeinheit aus der Lichtlaufzeit zwischen Aussendung des Sendelichts 14 und Empfang des Empfangslichts 20 und der Beobachtungsrichtung eine Position erfasster Objekte und/oder eine Objektkontur gewinnen kann. Die Entfernung zu dem erfassten Objekt kann die Auswertungseinheit 26 entweder mit einem phasenbasierten Lichtlaufzeitverfahren anhand eines Phasenunterschieds zu amplitudenmoduliertem Sendelicht 14 oder mit einem pulsbasierten Lichtlaufzeitverfahren anhand der Laufzeit von als Lichtpulsen ausgesandtem Sendelicht 14 ermitteln, wobei das Pulslaufzeitverfahren bevorzugt ist.

Der genaue Aufbau der omnidirektionalen Empfangsoptik 22 ist für die Erfindung nicht wesentlich. In dem dargestellten Ausführungsbeispiel besteht diese aus einer 360° Empfangslinse 28, die das Empfangslicht 20 zusammen mit einem Freiformspiegel 30 und einer Sammellinse 32 auf den Lichtempfänger 24 leitet. Es genügt, wenn der Lichtempfänger nur ein einziges einfaches Element ist, beispielsweise eine gewöhnliche Photodiode oder eine Lawinenphotodiode (APD, Avalanche Photodiode). Alternativ könnte auch ein Bildsensor mit zahlreichen laufzeitmessenden Einzelelementen eingesetzt werden (smart pixel). Die Position eines Pixels auf dem Bildsensor könnte dabei zusätzlich noch eine Positionsinformation des erfassten Objekts in sich tragen, nämlich den Winkel innerhalb der Überwachungsebene 12 (Azimut).

Die Auswerteeinheit 26 fungiert zugleich als Steuerung der Lichtquelle 12. Dazu ist sie in nicht dargestellter Weise mit der Lichtquelle 12 oder dessen nicht dargestellter Treiberschaltung verbunden. Über einen Ausgang 34 werden Objektpositionen, Objektkonturen oder sonstige Messdaten ausgegeben. Alternativ werden lediglich Rohdaten an dem Ausgang 34 bereitgestellt, und die Auswertungen werden extern vorgenommen.

Der Empfangskanal des Sensors 10 ist aufgrund der omnidirektionalen Optik 22 so ausgelegt, dass der Lichtempfänger 24 prinzipiell Empfangslicht 20 aus allen Richtungen empfängt. Ist der Lichtempfänger 20 nicht ortsaufgelöst, so steht die Winkelinformation nur über die Lichtquelle 12 bzw. über die Ansteuerung der Lichtquelle 12 durch die Auswerteeinheit 26, also in welche Richtung das Sendelicht 14 in den Überwachungsbereich 18 ausgesandt wurde, zur Verfügung.

Damit der Lichtempfänger 24 aber nicht dauerhaft Licht aus dem gesamten Überwachungsbereich 18 empfängt und somit viel Umgebungslicht aufnehmen würde, ist ein elektrisch steuerbares optisches Element 36, mit dem eine Richtungsselektivität ermöglicht wird, vorgesehen. Das elektrisch steuerbare Element 36 weist eine Vielzahl von Zonen auf, die eine variable Lichtdurchlässigkeit aufweisen. Dazu weist das elektrisch steuerbare Element 36 beispielsweise eine Flüssigkristallanzeige (LCD) auf. Durch Ansteuerung mit der Auswerteeinheit 26 werden einzelne Winkelsegmente möglichst intransparent, um Licht zu blocken, und jeweils nur ein Winkelsegment 36-1 in einer gewählten Beobachtungsrichtung ist transparent, so dass nur aus diesem Winkelbereich 36-1 das Empfangslicht 20 zu dem Lichtempfänger 24 durchgelassen wird. Das elektrisch steuerbare optische Element 36 hat dann die Funktion einer Sternblende, wie sie in Fig. 2 schematisch in der Draufsicht beispielhaft dargestellt ist. Selbstverständlich muss die Richtung des Sendelichts 14 mit dem empfangsseitigen elektrisch steuerbaren optischen Element 36 synchronisiert sein, um das Sendelicht 14 jeweils in den Winkelbereich 36-1 auszusenden, der gerade von dem Lichtempfänger 24 beobachtet werden kann.

Dadurch entsteht so etwas wie eine virtuelle Drehbewegung, bei der das Sendelicht 14 und das zugehörige Sichtfenster für das Empfangslicht 20 periodisch die Überwachungsebene 18 abtasten. Für die Funktion ist letztlich nicht entscheidend, in welcher Reihenfolge die Winkelsegmente transparent geschaltet werden. Somit sind auch abweichende Aktivierungsschemata möglich.

Prinzipiell wäre auch denkbar, dass das elektrisch steuerbare optische Element 36 auch so ausgebildet sein kann, dass die Funktion einer Sternblende mit rotierendem Winkelsegment mit dem Effekt der Elektrobenetzung ausgeführt wird.

Die Winkelsegmente müssen nicht notwendig durch das optische Element 36 definiert werden. Denkbar ist auch eine Pixelstruktur des Lichtempfängers 24, wobei jeweils eine Zone einer Pixelgruppe entspricht und Pixel einer Pixelgruppe geeignet zu Winkelsegmenten verbunden werden. Die Anzahl und Größe von Winkelsegmenten muss aber nicht direkt die Winkelauflösung des Sensors 10 bestimmen. Wenn z.B. das Sendelicht 14 eine präzisere Winkelposition erhält, so bildet das empfangsseitige Winkelsegment lediglich ein grobes Fenster für das Empfangslicht 20, um weniger Angriffsfläche für Fremdlicht zuzulassen. Die Winkelposition wird in diesem Fall nicht über das transparente Winkelsegment, sondern über das Sendelicht 14 bestimmt.

Zur weiteren Unterdrückung von Störlicht kann in bekannter Weise im Empfangslichtpfad ein Filter 38 vorgesehen sein, das beispielsweise nur Licht mit einer Wellenlänge des Sendelichts 14 durchlässt.

Ein Gehäuse des Sensors 10 und entsprechende Halterungen der einzelnen Komponenten sind in der nur schematischen Darstellung der Fig. 1 nicht detailliert gezeigt.

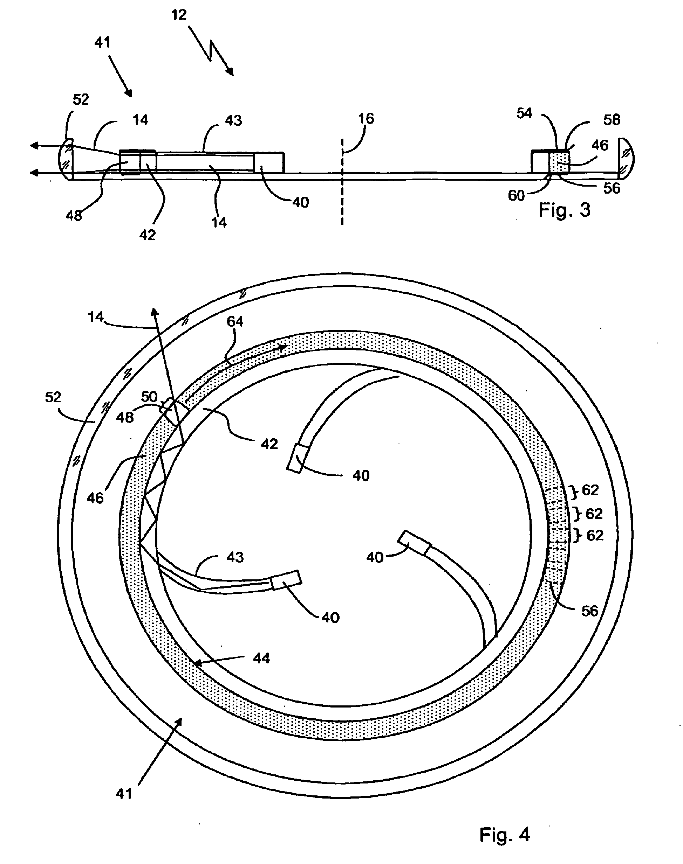

Die Fig. 3 und 4 zeigen die für die Erfindung wesentliche Lichtquelle 12, ebenfalls nur in schematischer Weise. Die Lichtquelle 12 weist wenigstens ein Lichtsendeelement 40 auf, das beispielsweise ein Laserchip sein kann, der Laserlicht einer Wellenlänge von 905 nm aussendet. Das Sendelicht 14 wird mit einer neuartigen Ablenkeinheit 41 in verschiedene Beobachtungsrichtungen abgelenkt. Diese Ablenkeinheit 41 und deren Funktionsweise werden nachfolgend erläutert.

Das Sendelicht 14 wird in geeigneter bekannter Weise in ein Lichteinkoppelelement 43 eingekoppelt, bei der es sich um eine Lichtleitfaser bekannter Bauart handeln kann. Das Lichteinkoppelelement 43 dient zum Einkoppeln, beispielsweise über ein nicht näher dargestelltes Y-Stück, des Sendelichts in ein gekrümmtes Lichtleitelement 42, bei dem es sich bevorzugt um einen Lichtleitfaserring handelt, der z.B. aus Polydimethylsiloxan (PDMS) oder Polycarbonat besteht. Der Querschnitt des Faserrings kann typischerweise 200 x 200 µm² und der Durchmesser 5 bis 20 mm betragen.

Diesem Lichtleitfaserring 42 ist auf der konvexen Außenseite ein Mikrokanal 44 benachbart. Der Mikrokanal 44 ist somit auch als Kreiskanal ausgebildet. Der Mikrokanal 44 besitzt ähnliche Dimensionen wie der Faserring 42.

In dem Mikrokanal 44 befinden sich zwei polare Fluide 46 und 48, die sich nicht mischen und von denen ein erstes 46 einen Brechungsindex aufweist, der kleiner ist als der Brechungsindex des Faserrings 42. Wenn der Faserring 42 aus Polycarbonat besteht, beträgt der Brechungsindex 1,585 und der des ersten Fluids 46 könnte 1,3 betragen (Das erste Fluid könnte z.B. ein sogenanntes "Cargille Immersion Liquid" sein). Der Brechungsindex des zweiten Fluids 48 ist größer oder gleich dem des Faserrings 42. Das erste Fluid 46 erfüllt fast den gesamten Kanal 44 aus mit Ausnahme eines im Vergleich zum Gesamtumfang sehr kurzen Abschnittes 50, in dem sich ein kleiner Tropfen des zweiten Fluids 48 befindet.

Der Faserring 42 ist nun derart ausgebildet, dass das eingekoppelte Sendelicht in diesem Faserring total reflektiert wird, was auf der konvexen Außenseite des Faserrings 42 durch die unterschiedlichen Brechungsindizes von Faserring 42 und erstem polaren Fluid 46 gewährleistet ist. Auf den anderen Seiten des Faserrings 42 kann die Totalreflexion durch spiegelnde Flächen bewerkstelligt sein.

Lediglich in dem Abschnitt des Faserrings 42, in dem das zweite Fluid 48 dem Faserring 42 benachbart ist, also in Abschnitt 50, findet an der konvexen Außenseite keine Totalreflexion statt, da der Brechungsindex des zweiten polaren Fluids 48 kleiner bzw. gleich dem des Faserrings 42 ist. Dadurch kann das Sendelicht 14 durch das zweite Fluid 48 hindurch aus dem Faserring 42 austreten. Das zweite polare Fluid 48 bildet somit in dem Abschnitt 50 quasi ein Fenster für das Sendelicht 14.

Durch eine ringförmige Sendelinse 52 wird das ausgekoppelte Sendelicht 14 gebündelt, so dass ein definierter Sendelichtstrahl 14 mit parallelem Sendelicht von der Lichtquelle 12 ausgesandt wird.

Des Weiteren sind eine erste Elektrode 54 und eine Vielzahl zweiter Elektroden 56 am Rand des zweiten Kanals 44 angeordnet. Die Elektrode 54 erstreckt sich dabei in Längsrichtung über den gesamten Umfang. Dabei ist die Elektrode 54 beispielsweise auf der Oberseite 58 entsprechend der Fig. 3 angeordnet und die zweite Elektrode 56 auf der Unterseite 60. Von den zweiten Elektroden 56 sind eine Vielzahl dieser Elektroden vorgesehen, die jeweils einzeln für sich einen kleinen Winkelbereich 62 abdecken und voneinander einen Abstand haben, so dass an die zweiten Elektroden 62 unterschiedliche Potenziale angelegt werden können. Die Ansteuerung der Elektroden 54 und 56 erfolgt über die Auswerteeinheit 26.

Die Elektroden 54 und 56 dienen dazu, ein geeignetes Potenzial anzulegen, so dass auf die Grenzfläche zwischen den polaren Fluiden 48 und 46 insgesamt Kräfte in Längsrichtung des Kanals 44 ausgeübt werden, wie sie durch den Pfeil 64 angedeutet sind. Derartige Kräfte treten aufgrund des Effektes der Elektrobenetzung auf, wie ausführlich in L Yeo, J Friend. Electrowetting, Applications. In Encyclopedia of Microfluidics and Nanofluidics (ed. D Li), pp. 606-615 (Springer, New York, 2008) beschrieben ist.

Auf diese Weise lässt sich der Tropfen des zweiten polaren Fluides 48 in dem Kanal 44 um die Achse 16 rotieren. Da nur an der Stelle, an der sich der Tropfen zweiten polaren Fluids 48 befindet, das Sendelicht 14 ausgekoppelt werden kann, wird letztendlich das Sendelicht 14 durch die Lichtquelle 12 in veränderlichem Winkel zwischen 0° und 360° ausgesandt, so dass letztendlich ein um die Achse 16 rotierender Laserstrahl 14 erhalten ist.

In einer Weiterbildung könnten mehrere Sendelichtelemente 40, also mehrere Laserchips, vorgesehen sein, so dass Sendelicht an mehreren Stellen, z.B. in Winkelabständen von 120°, in den Faserring eingekoppelt wird (Fig. 4). Auch wäre es denkbar anstelle nur eines Abschnitts 50 mit zweitem Fluid, mehrere solcher Abschnitte vorzusehen, so dass gleichzeitig mehrere Lichtstrahlen in unterschiedliche Winkel ausgesendet werden können.

## Patentansprüche

1. Lichtquelle für einen optoelektronischen Sensor (10), die Licht (14) in verschiedene Beobachtungsrichtungen aussenden kann, mit einem Lichtsendeelement (40) zur Erzeugung von Sendelicht (14) und einer Ablenkeinheit (41), mit der das Sendelicht (14) in unterschiedliche Richtungen ablenkbar ist, **dadurch gekennzeichnet, dass** die Ablenkeinheit (41) ein gekrümmtes Lichtleitelement (42) umfasst, in das das Sendelicht (14) einkoppelbar ist und ein Kanal (44) dem Lichtleitelement (42) auf der konvexen Seite unmittelbar benachbart ist, und der Kanal (44) zwei polare Fluide (46 und 48) mit unterschiedlichen Brechungsindizes enthält, die nicht gemischt sind und die mittels elektrischer Kräfte aufgrund des Effektes der Elektrobenetzung in dem Kanal (44) in Längsrichtung (64) verschiebbar sind, wobei der Brechungsindex des ersten Fluids (46) kleiner als der des Lichtleitelements (42) ist, so dass das eingekoppelte Sendelicht (14) in dem Lichtleitelement (42) in den Abschnitten, in denen das erste Fluid (46) dem Lichtleitelement (42) benachbart ist, totalreflektiert wird, und der Brechungsindex des zweiten Fluids (48) gleich oder größer ist als der des Lichtleitelements (42), so dass das eingekoppelte Sendelicht (14) aus dem Lichtleitelement (42) in den Bereichen (50) ausgekoppelt wird, in denen das zweite Fluid (48) dem Lichtleitelement (42) benachbart ist.

2. Lichtquelle nach Anspruch 1, **dadurch gekennzeichnet, dass** das Lichtleitelement ein Lichtleitfaserring aus Polydimethylsiloxan oder Polycarbonat ist.

3. Lichtquelle nach Anspruch 2, **dadurch gekennzeichnet, dass** das zweite Fluid sich nur über einen Bruchteil des Faserringumfangs erstreckt und der Rest des Kanals mit dem ersten Fluid gefüllt ist.

4. Lichtquelle nach einem der vorhergehenden Ansprüche, **dadurch gekennzeichnet, dass** Elektroden dem Kanal benachbart sind, um die beiden polaren Fluide in Umfangsrichtung rotieren zu lassen.

5. Entfernungsmessender optoelektronischer Sensor (10) zur Erfassung von Objekten und/oder Objektkonturen in einem Überwachungsbereich (18) mit einer Lichtquelle (12) zur Aussendung von Sendelicht (14) in den Überwachungsbereich (18), einem Lichtempfänger (24) für aus dem Überwachungsbereich (18) remittiertes oder reflektiertes Empfangslicht (20) sowie mit einer Auswerteeinheit (26), welche dafür ausgebildet ist, eine Position erfasster Objekte und/oder eine Objektkontur aus der Lichtlaufzeit zwischen Aussendung des Sendelichts (14) und Empfang des Empfangslichts (20) und einer Beobachtungsrichtung zu gewinnen, **gekennzeichnet durch** eine Lichtquelle (12) nach einem der vorhergehenden Ansprüche.

6. Sensor nach Anspruch 5, **dadurch gekennzeichnet, dass** eine omnidirektionale Empfangsoptik vorgesehen ist, um das Empfangslicht aus jeder Beobachtungsrichtung auf den Lichtempfänger zu leiten.

7. Sensor nach Anspruch 6, **dadurch gekennzeichnet, dass** die omnidirektionale Empfangsoptik eine Sternblende aufweist, welche den Überwachungsbereich in Sektoren aufteilt.

8. Sensor nach einem der vorhergehenden Ansprüche 5 bis 7, **dadurch gekennzeichnet, dass** dem Lichtempfänger ein elektrisch steuerbares optisches Element mit einer Vielzahl von in ihrer Lichtdurchlässigkeit steuerbaren Zonen vorgeordnet ist und dass eine wählbare Beobachtungsrichtung durch höhere Lichtdurchlässigkeit von Zonen, die der gewählten Beobachtungsrichtung zugeordnet sind, und geringere Lichtdurchlässigkeit der übrigen Zonen vorgebbar ist.

9. Sensor nach Anspruch 8, **dadurch gekennzeichnet, dass** die virtuelle Drehbewegung des elektrisch steuerbaren optischen Elements mit der Rotationsgeschwindigkeit des zweiten Fluids synchronisiert ist.

## Claims

1. Light source of an opto-electronic sensor (10), the light (14) can emit in different observation directions, with a light emitting element (40) for generating the transmitted light (14) and a deflection unit (41) with which the transmitted light (14) is deflected in different directions, **characterized in that** the deflection unit (41) comprises a curved light guiding element (42) in which the transmitted light (14) can be coupled, and a channel (44) is arranged immediately adjacent to the convex side of said light guiding element (42), and the channel (44) contains two polar fluids (46 and 48) having different refractive indices and which are not mixed, and which are displaceably in said channel (44) in the longitudinal direction (64) by means of electrical forces due to the effect of electrowetting, wherein the refractive index of the first fluid (46) is smaller than that of the light guiding element (42), so that the coupled transmitting light (14) is totally reflected in said light guiding element (42) **in that** sections in which the first fluid (46) is adjacent, and the refractive index of the second fluid (48) is equal to or greater than that of the light guiding element (42) so that transmitted light (14) which was coupled into the light guiding element is coupled out of the light guiding element (42) **in that** sections (50) in which the second fluid (48) is adjacent the light guiding element (42).

2. Light source according to claim 1, **characterized in that** the light guiding element is a ring of light guiding fibres consisting of polydimethylsiloxane or polycarbonate.

3. Light source according to claim 2, **characterized in that** the second fluid extends only over a fraction of the fiber ring and the remainder of the circumference of the channel is filled with the first fluid .

4. Light source according to one of the preceding claims, **characterized in that** electrodes are adjacent to the channel, in order to rotate the two polar fluid in the circumferential direction.

5. Distance measuring optoelectronic sensor (10) for detection of objects and/or object contours in a monitoring area (18) with a light source (12) for the transmission of the transmitted light (14) in the monitoring area (18), a light receiver (24) for the reception of remitted or reflected receiving light (20) from the monitoring area (18) and an evaluation unit (26) which is adapted to determine a position of detected objects and/or an object contour from the time-of-flight of the light between the transmission of the transmitted light (14) and reception of the received light (20) and an observation direction, **characterized by** a light source (12) according to one of the preceding claims.

6. Sensor according to claim 5, **characterized in that** an omnidirectional receiving optical system is provided for directing the received light from any monitoring direction onto the light receiver.

7. Sensor according to claim 6, **characterized in that** the omnidirectional receiving optics comprises a star aperture, which divides the monitoring area into sectors.

8. Sensor according to one of the preceding claims 5 to 7, **characterized in that** an electrically controllable optical element with a plurality of controllable zones which light permeability can be controlled is arranged in front of the light receiver, and **in that** a selectable observation direction can be predefined by higher light permeability zones associated with the selected observation direction and lower light transmittance of the other zones.

9. Sensor according to claim 8, **characterized in that** the virtual rotational movement of the electrically controllable optical element is synchronized with the rotation speed of the second fluid.

## Revendications

1. Source de lumière pour un capteur optoélectronique (10), qui est capable d'émettre de la lumière (14) dans différentes directions d'observation, comprenant un élément émetteur de lumière (40) pour générer de la lumière émise (14) est une unité de déflexion (41) avec laquelle la lumière émise (14) peut être défléchie dans différentes directions, **caractérisée en ce que** l'unité de déflexion (41) comprend un élément guide de lumière (42) cintré, dans lequel la lumière émise (14) est susceptible d'être injectée, et un canal (44) est directement voisin de l'élément guide de lumière (42) sur le côté convexe, et le canal (44) contient deux fluides polaires (46 et 48) avec des indices de réfraction différents, qui ne sont pas mélangés et qui sont déplaçables dans le canal (44) en direction longitudinale (64) au moyen de forces électriques en raison de l'effet de "mouillage électrique", dans lesquels l'indice de réfraction du premier fluide (46) est inférieur à celui de l'élément guide de lumière (42) de sorte que la lumière émise injectée (14) subit une réflexion totale dans l'élément guide de lumière (42) dans les portions dans lesquels le premier fluide (46) est voisin de l'élément guide de lumière (42), et l'indice de réfraction du second fluide (48) est égal ou supérieur à celui de l'élément guide de lumière (42), de sorte que la lumière émise injectée (14) est découplée hors de l'élément guide de lumière (42) dans les régions (50) dans lesquelles le second fluide (48) est voisin de l'élément guide de lumière (42).

2. Source de lumière selon la revendication 1, **caractérisée en ce que** l'élément guide de lumière est un anneau de fibres guide de lumière en polydiméthyle siloxane ou en polycarbonate.

3. Source de lumière selon la revendication 2, **caractérisée en ce que** le second fluide s'étend seulement sur une fraction de la circonférence de l'anneau de fibres et le reste du canal est rempli avec le premier fluide.

4. Source de lumière selon l'une des revendications précédentes, **caractérisée en ce que** des électrodes sont voisines du canal afin de mettre en rotation les deux fluides polaires en direction circonférentielle.

5. Capteur optoélectronique (10) mesurant des éloignements pour la détection d'objets et/ou de contours d'objets dans une zone de surveillance (18) comprenant une source de lumière (12) pour émettre une lumière émise (14) dans la zone de surveillance (18), un récepteur de lumière (24) pour la lumière reçue (20) réémise ou réfléchie hors de la zone de surveillance (18), ainsi qu'une unité d'évaluation (26) qui est réalisée pour obtenir une position des objets détectés et/ou un contour des objets à partir du temps de parcours de la lumière entre l'émission de la lumière émise (14) et la réception de la lumière reçue (20) et à partir d'une direction d'observation, **caractérisé par** une source de lumière (12) selon l'une des revendications précédentes.

6. Capteur selon la revendication 5, **caractérisé en ce qu'**il est prévu une optique de réception omnidirectionnelle, afin de mener la lumière reçue vers le récepteur de lumière depuis toute direction d'observation.

7. Capteur selon la revendication 6, **caractérisé en ce que** l'optique de réception omnidirectionnelle comprend un diaphragme en étoile qui subdivise la zone de surveillance en secteurs.

8. Capteur selon l'une des revendications précédentes 5 à 7, **caractérisé en ce qu'**un élément optique à commande électrique avec une pluralité de zones dont la perméabilité à la lumière peut être commandée est agencé devant le récepteur de lumière, et **en ce qu'**une direction d'observation au choix est susceptible d'être imposée par augmentation de la perméabilité à la lumière dans des zones qui sont associées à la direction d'observation choisie et par diminution de la perméabilité à la lumière dans les autres zones.

9. Capteur selon la revendication 8, **caractérisé en ce que** le mouvement rotatif virtuel de l'élément optique à commande électrique est synchronisé avec la vitesse de rotation du second fluide.
